# EUROPÄISCHE PATENTSCHRIFT

(11) **EP 3 396 284 B1**
(45) Veröffentlichungstag und Bekanntmachung des Hinweises auf die Patenterteilung: **23.10.2019**
(21) Anmeldenummer: 18168866.4
(22) Anmeldetag: 24.04.2018
(51) Int. Cl.: F26B 3/04, F26B 17/04, F26B 21/04, F26B 23/00, F26B 21/06

(54) **DURCHLAUFTROCKNER MIT EINER ABLUFTRÜCKFÜHREINRICHTUNG**
CONTINUOUS FLOW DRIER WITH AN EXHAUST AIR RETURN DEVICE
SÉCHOIR CONTINU POURVU D'UN DISPOSITIF DE RECYCLAGE D'AIR D'ÉCHAPPEMENT

(30) Priorität: 24.04.2017 DE 102017108697
(43) Veröffentlichungstag der Anmeldung: 31.10.2018
(73) Patentinhaber: Stela Laxhuber GmbH, 84323 Massing (DE)
(72) Erfinder: Laxhuber, Thomas Christian, 84323 Massing (DE); Latein, Tobias, 84567 Erlbach (DE)
(74) Vertreter: Rothkopf, Ferdinand

(56) Entgegenhaltungen:
- WO-A1-2014/168559
- WO-A1-2015/127490
- WO-A1-2017/133727
- DE-A1- 2 941 037
- DE-A1-102014 200 751

## Beschreibung

### Hintergrund der Erfindung

Die Erfindung betrifft einen Durchlauftrockner zum Trocknen eines Gutes in zwei Sektionen mittels Warmluft mit einer Frischluftzuführeinrichtung zum Zuführen von Frischluft als Zuluft in eine Sektion, einer Abluftrückführeinrichtung zum Abführen von Abluft aus der anderen Sektion und Rückführen der Abluft durch eine Rückführleitung als Zuluft in die andere Sektion und einem Wärmeübertrager, durch den hindurch zum einen Frischluft und zum anderen Abluft geführt sind, zum Übertragen von Abwärme der Abluft in die Frischluft, wobei von der Rückführleitung eine Leitung abzweigt, mittels der abgezweigte Abluft zu dem Wärmeübertrager und durch diesen hindurch geführt ist.

Durchlauftrockner sind Trockner, bei denen zu trocknendes Gut kontinuierlich oder chargenweise durch den Trockner transportiert wird. Ein solcher Trockner ist insbesondere ein Bandtrockner, der mittels eines Bandes das zu trocknende Gut durch den Durchlauftrockner fördert. Das zu trocknende Gut, zum Beispiel Klärschlamm, Holzspäne, Hackschnitzel, RDF (refuse-derived fuel), SSW (solid shredded waste), MSW (municipal solid waste), Hausabfälle, Gras oder landwirtschaftliche Produkte und Nebenprodukte, wie Zuckerrübenschnitzel, ist dabei zunächst feucht bzw. nass. Das Gut wird getrocknet, indem ihm Feuchtigkeit mittels Warmluft entzogen wird. Die Warmluft wird extra erzeugt, indem insbesondere Luft aus der Umgebung des Durchlauftrockners erwärmt wird. Beim Erwärmen der Luft sinkt die relative Luftfeuchte dieser Luft, die Luft wird "trockener". Diese Warmluft mit niedriger relativer Luftfeuchte durchströmt dann im Durchlauftrockner das zu trocknende Gut und umströmt dessen Bestandteile.

Zum Erwärmen der Luft zu Warmluft wird selbstverständlich Energie benötigt. Diese Energie ist verloren, wenn die erzeugte Warmluft nach dem Trocknen des Gutes in die Umgebung entlassen wird. Es sind daher erste Ansätze bekannt, um die Warmluft im Kreislauf zu führen.

Das zu trocknende Gut wird zugleich in einer Transportrichtung durch den Durchlauftrockner gefördert und durchläuft dabei vorzugsweise mehrere Sektionen. Die einzelne Sektion unterteilt den Durchlauftrockner räumlich. Die Sektionen können dazu voneinander luftströmungsmäßig weitgehend getrennt sein. Es sind so in den Sektionen unterschiedliche Luftströme möglich, die je unterschiedliche relative Luftfeuchten und unterschiedliche Temperaturen aufweisen können.

Zum Zuführen von Luft zum Durchlauftrockner ist eine Frischluftzuführeinrichtung vorgesehen, die aus der Umgebung entnommene, in der Regel trockene Frischluft dem Durchlauftrockner als Zuluft zuführt.

Bei solchen Durchlauftrocknern ist es ferner bekannt eine Abluftrückführeinrichtung vorzusehen, mittels der Abluft aus dem Trocknungsvorgang abgezogen und dann zumindest teilweise in den Durchlauftrockner zurückgeführt wird. Ein Teil der Abluft wird dabei durch einen Wärmeübertrager geleitet, durch den auch zugeführte Frischluft geführt wird. So kann thermische Energie bzw. Abwärme von der Abluft an die Zuluft übergeführt werden.

Aus WO 2014 168559 A1 ist ein Stufentrockner mit einer ersten und zweiten Trockenzone bekannt. Dabei verläuft ein Teilprozess A eines Trocknungsprozesses in der ersten Trockenzone und ein Teilprozess B in der zweiten Trockenzone. Zum Teilprozess B ist Frischluft aus der Umgebung geführt. Aus dem Teilprozess A ist eine Abluft abgeführt und zum Teil als gesättigter Luftstrom durch einen externen Wärmetauscher geführt, durch den auch die Frischluft geführt ist. Der durch den externen Wärmetauscher geführte Luftstrom ist dann als Teilstrom bzw. Zuluft in den Teilprozess A rückgeführt. Damit ist sämtliche rückgeführte Abluft durch den externen Wärmetauscher geführt.

Aus WO 2015 127 490 A1 ist ein Durchlauftrockner bekannt, bei dem ein zu trocknendes Schüttgut nacheinander durch eine Vortrocknungskammer und eine Nachtrocknungskammer geführt ist. Dabei umfasst ein Luftstrom in einer Nachtrocknungskammer einen im Kreislauf geführten Umluftstrom, aus der ein Teilluftstrom abgezweigt und durch einen Wärmetauscher hindurchgeführt ist. Nach dem Hindurchführen durch den Wärmetauscher wird der Teilluftstrom zur Gänze wieder in den Umluftstrom zurückgeführt. Ein Luftstrom durch die mindestens eine Vortrocknungskammer ist aus einer durch den Wärmetauscher angesaugten Frischluft gebildet.

### Zugrundeliegende Aufgabe

Der Erfindung liegt die Aufgabe zugrunde, einen Durchlauftrockner zum Trocknen eines Gutes mittels Warmluft zu schaffen, der im Vergleich zu bekannten Durchlauftrocknern bei geringem Energieverbrauch zugleich besonders geringe Staubemissionen möglich macht.

### Erfindungsgemäße Lösung

Diese Aufgabe ist erfindungsgemäß mit einem Durchlauftrockner zum Trocknen eines Gutes in zwei Sektionen mittels Warmluft gelöst, der mit einer ersten und einer zweiten Sektion versehen ist, die vom Gut in einer Transportrichtung nacheinander durchlaufen werden, der mit einer Frischluftzuführeinrichtung zum Zuführen von Frischluft als Zuluft in eine Sektion versehen ist, der mit einer Abluftrückführeinrichtung zum Abführen von Abluft aus der anderen Sektion und Rückführen der Abluft durch eine Rückführleitung als Zuluft in die andere Sektion versehen ist und der mit einem Wärmeübertrager versehen ist, durch den hindurch zum einen Frischluft und zum anderen Abluft geführt sind, zum Übertragen von Abwärme der Abluft in die Frischluft. Dabei zweigt von der Rückführleitung eine Leitung ab, mittels der abgezweigte Abluft zu dem Wärmeübertrager und durch diesen hindurch geführt ist. Gemäß der Erfindung ist eine Abführvorrichtung zum Abführen eines Teils dieser abgezweigten Abluft aus dem Durchlauftrockner heraus vorgesehen.

Die derart erfindungsgemäß abgeführte Abluft, wird aus dem Trocknungsbereich, also insbesondere dem das Transportband und das dortige Gut umschließenden Raum vollständig ausgeschieden. Diese Abluft ist entsprechend durch weitere Zuluft zu ersetzen. Mit dem derartigen vollständigen Abführen von Luft aus dem Durchlauftrockner entsteht in diesem insgesamt ein Unterdruck, wodurch ein Austrag an Staub aus dem Durchlauftrockner in dessen Umgebung vermieden werden kann.

Die Abführvorrichtung zum Abführen eines Teils der Abluft ist vorzugsweise in Strömungsrichtung der Abluft hinter dem Wärmeübertrager angeordnet. Es wird also bevorzugt die gänzlich abzuführende Abluft erst hinter dem Wärmetauscher aus dem rückgeführten Luftstrom entnommen. Mit der derartigen Luftführung kann am Wärmetauscher dieser später gänzlich abgeführten Abluft zuerst noch deren Abwärme entzogen werden. Erst danach wird dieser Teil der Abluft dann insgesamt abgeführt und insbesondere in die Umgebung des Durchlauftrockners abgeschieden.

Dabei ist vorteilhaft eine Vorrichtung vorgesehen, insbesondere in Gestalt mindestens einer Klappe und/oder mindestens eines Ventilators, mittels derer die Menge an vollständig abgeführter Abluft im Verhältnis zur Menge an rückgeführter Abluft zu steuern ist.

Vorzugsweise sind ferner eine erste und eine zweite Sektion vorgesehen, die vom Gut in einer Transportrichtung nacheinander durchlaufen werden, wobei die Frischluftzuführeinrichtung zum Zuführen von Frischluft als Zuluft in die erste Sektion, und die Abluftrückführeinrichtung zum Abführen von Abluft aus der zweiten Sektion und Rückführen als Zuluft zurück in die zweite Sektion gestaltet sind. Mit der derartigen Aufteilung von Sektionen wird die Abluft einer Sektion des Durchlauftrockners entnommen, in der diese Abluft stark mit Feuchtigkeit aufgesättigt aber noch vergleichsweise wenig heiß ist. Mit solcher Abluft kann der genannte Kondensationseffekt und der sich damit ergebende Wärmeentzug durch Phasenumwandlung besonders stark genutzt werden.

Alternativ sind vorteilhaft eine erste und eine zweite Sektion vorgesehen, die vom Gut in einer Transportrichtung nacheinander durchlaufen werden, wobei die Frischluftzuführeinrichtung zum Zuführen von Frischluft als Zuluft in die zweite Sektion, und die Abluftrückführeinrichtung zum Abführen von Abluft aus der ersten Sektion und Rückführen als Zuluft zurück in die erste Sektion gestaltet sind. Die Abluft wird dann einem hinteren Teil des Durchlauftrockners entzogen, in dem diese Abluft nicht zwingend vollständig aufgesättigt aber in jedem Fall vergleichsweise heiß ist. Mit derartiger Abluft kann Frischluft auf eine relativ hohe Temperatur vorgewärmt werden.

An dem erfindungsgemäßen Durchlauftrockner ist ferner vorteilhaft ein Heizer vorgesehen, mittels dessen die Frischluft vor deren Zuführen als Zuluft aufzuheizen ist. Die zugeführte Frischluft kann so präzise auf die gewünschte Trocknungstemperatur geregelt werden.

Ferner ist an dem Durchlauftrockner gemäß der Erfindung vorzugsweise ein Heizer vorgesehen, mittels dessen die durch den Wärmeübertrager geführte Abluft vor deren Zuführen als Zuluft aufzuheizen ist. So kann auch die zurückgeführte Abluft hinsichtlich ihrer relativen Luftfeuchte verbessert und aufbereitet werden, bevor sie wieder in die jeweilige Sektion des Durchlauftrockners rückgeführt wird.

Vorteilhaft ist der erfindungsgemäße Wärmeübertrager derart dimensioniert, dass an ihm Feuchtigkeit aus der Abluft auskondensiert. Feuchtigkeit kondensiert aus, wenn die relative Luftfeuchtigkeit der jeweils relevanten Luft 100% (in Worten: einhundert Prozent) erreicht ist. Die relative Luftfeuchtigkeit in Luft nimmt zu, wenn die Luft, wie in diesem Fall die warme Abluft, abkühlt. Das erfindungsgemäß angestrebte Auskondensieren wird vorzugsweise erzielt, indem die Feuchtigkeit an einer Trennfläche des Wärmeübertragers auskondensiert. Dazu gibt die Abluft so viel thermische Energie an der Trennfläche ab, dass die relative Luftfeuchtigkeit in der Abluft 100% erreicht. Der erfindungsgemäße erste Wärmeübertrager hat so vorteilhaft drei Funktionen. Die erste Funktion ist das Entfeuchten der Abluft, die durch den ersten Wärmeübertrager strömt. Die zweite Funktion ist das Aufheizen der zugeführten Frischluft. Die dritte Funktion ist das Verringern der relativer Luftfeuchte der zugeführten Frischluft, bedingt durch das Aufheizen dieser Frischluft.

Die Abluftrückführung und/oder die Frischluftzuführung sind vorzugsweise je mit einer Saugvorrichtung versehen, mittels derer die zu fördernde Luft zunächst durch das zu trocknende Gut hindurchgesaugt und dann rückgeführt bzw. abgeführt wird. Indem derart die Luft mittels Saugen und nicht mittels Blasen gefördert wird, kann innerhalb des Gutes und den genannten Sektionen ein Unterdruck erzeugt werden, der verhindert, dass aus diesen Bereichen Staub nach außen gelangt.

Vorteilhaft ist ferner in zumindest einer der Sektionen ein Abluft-Sensor vorgesehen, mittels dessen in der Abluft deren Feuchte zu ermitteln ist. Ein derartiger Luft-Sensor ermittelt insbesondere die relative Luftfeuchtigkeit und/oder die Temperatur der ihn an- oder umströmenden Luft. Vorteilhaft ist mittels des Abluft-Sensors so die relative Luftfeuchtigkeit der Abluft zu ermitteln. Wenn die relative Luftfeuchtigkeit der Abluft bekannt ist, kann mittels einer Steuerung definiert sein, ob diese Abluft zu entfeuchten ist oder ob diese Luft wieder direkt der jeweiligen Sektion bzw. dem jeweiligen Bereich zuzuführen ist.

Alternativ oder zusätzlich ist ferner ein Zuluft-Sensor vorgesehen, mittels dessen in der Zuluft deren Feuchte zu ermitteln ist. Der Zuluft-Sensor ermittelt die relative Luftfeuchtigkeit der anströmenden Zuluft. Vorteilhaft ist so zu ermitteln, mit welcher relativen Luftfeuchtigkeit die Zuluft in die jeweilige Sektion hineinströmt. Besonders vorteilhaft ist so auch zu ermitteln, ob und um wieviel Grad Celsius die Zuluft zusätzlich durch einen Heizer aufzuwärmen ist, um eine gewünschte relative Luftfeuchtigkeit in der Zuluft zu erreichen.

In bevorzugter Weise sind ferner zum Transportieren des Gutes durch den Durchlauftrockner zwei Bänder vorgesehen, die insbesondere der ersten Sektion sowie der zweiten Sektion zugeordnet sind. Ein derart zweigeteiltes Band in einem Durchlauftrockner ermöglicht es, dass jede der beiden Sektionen ein eigenes Band aufweist. So können die beiden Sektionen auch räumlich getrennt voneinander, insbesondere übereinander, angeordnet werden.

Ferner ist vorzugsweise auch eine Regeleinrichtung vorgesehen, mittels der die Feuchte in der Abluft zu messen und eine Luftführung in der Abluftrückführeinrichtung, im ersten Wärmeübertrager und/oder im zweiten Wärmeübertrager zu regeln ist. Eine Regeleinrichtung bzw. Steuerung wertet Eingänge der Regeleinrichtung aus und regelt bzw. steuert mittels einer Logik der Regeleinrichtung deren Ausgänge. Als Eingänge dienen hier elektrische Signale von Sensoren unterschiedlicher Art, wie beispielsweise einem Temperatursensor oder einem Feuchtesensor. Als Ausgänge dienen meist Schalter oder elektrische Signale, beispielsweise zum Steuern des Heizers. Mittels der Regeleinrichtung ist vorteilhaft die Luftführung, insbesondere mittels Ventilation, in der Abluftrückführeinrichtung an die jeweilig vorherrschende relative Luftfeuchte der Abluft anzupassen.

Die Erfindung ist auch auf ein Verfahren zum Betreiben eines Durchlauftrockners zum Trocknen eines Gutes in zwei Sektionen mittels Warmluft gerichtet, bei dem Frischluft als Zuluft in eine Sektion zugeführt wird, Abluft aus der anderen Sektion abgeführt und die Abluft durch eine Rückführleitung als Zuluft in die andere Sektion rückgeführt wird und mittels eines Wärmeübertragers Abwärme der Abluft in die Frischluft übertragen wird. Dabei zweigt von der Rückführleitung eine Leitung ab, mittels der abgeweigte Abluft zu dem Wärmeübertrager und durch diesen hindurch geführt wird. Erfindungsgemäß wird ein Teil dieser abgezweigten Abluft gänzlich aus dem Durchlauftrockner heraus abgeführt.

### Kurzbeschreibunq der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen stark vereinfachten Längsschnitt eines Durchlauftrockners gemäß dem Stand der Technik und
- Fig. 2: einen stark vereinfachten Längsschnitt eines erfindungsgemäßen Durchlauftrockners.

### Detaillierte Beschreibung des Ausführunqsbeispiels

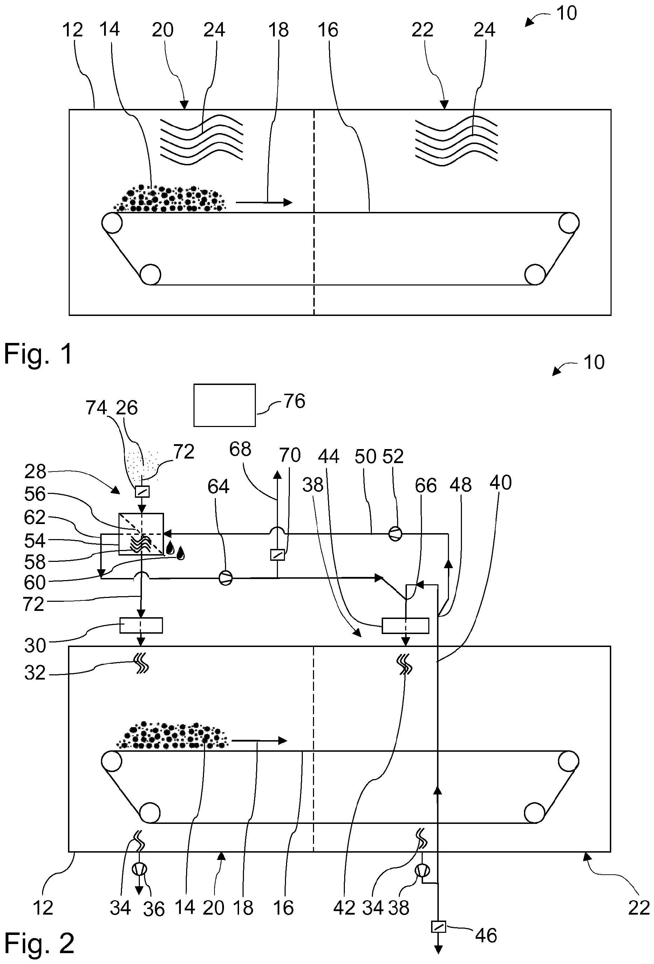

In den Fig. 1 und 2 ist je ein Durchlauftrockner 10 in Form eines Bandtrockners gezeigt. Der Durchlauftrockner 10 weist ein Gehäuse 12 auf, durch das zunächst feuchtes oder nasses Gut 14 mittels eines Bandes 16 in einer Transportrichtung 18 durch den Durchlauftrockner 10 hindurch zu transportieren ist.

Das Gut 14 durchläuft während des Transports zunächst eine erste Sektion 20 und danach eine zweite Sektion 22. Die beiden Sektionen 20 und 22 unterteilen das Gehäuse 12 räumlich. Sie sind in Transportrichtung gegebenenfalls mittels einer Trennwand oder mehreren Trennwänden luftströmungstechnisch weitgehend voneinander getrennt. Die Sektionen 20 und 22 können auch ihrerseits nochmals in Untersektionen unterteilt sein.

Innerhalb des Gehäuses 12 befindet sich Warmluft 24, die dem zu trocknenden Gut 14 (nicht dargestellte) Feuchtigkeit entzieht. Mit dem Entziehen von Feuchtigkeit aus dem Gut 14 wird das Gut 14 trockener, es wird getrocknet.

Fig. 2 veranschaulicht, wie bei dem dortigen, erfindungsgemäßen Durchlauftrockner 10 mittels Warmluft ein solches Gut 14 getrocknet wird. Zum Trocknen strömt Frischluft 26 von außerhalb in der ersten Sektion 20 in das Gehäuse 12, gefördert von einer Frischluftzuführeinrichtung 28. Die Frischluft 26 durchströmt einen ersten Heizer 30, der die Frischluft 26 auf ihrem Weg durch den Heizer 30 erwärmt. Mit dem Erwärmen der Frischluft 26 nimmt die relative Luftfeuchtigkeit der Frischluft 26 ab, die Frischluft 26 wird "trockener".

Diese Frischluft 26 wird nach dem Erwärmen als Zuluft 32 bezeichnet. Die Zuluft 32 strömt in die Sektion 20 und umströmt dort die einzelnen Partikel des Gutes 14 bzw. sie durchströmt die Schicht des Gutes 14 auf dem Band 16. Bei diesem Umströmen der Partikel des Gutes 14 nimmt die Zuluft 32 Feuchtigkeit aus dem Gut 14 auf. Die relative Luftfeuchtigkeit der Zuluft 32 steigt, die Zuluft 32 wird "feuchter". Die angefeuchtete Zuluft 32 wird nachfolgend aus der Sektion 20 als Abluft 34 mittels einer Abluftabführung 36 mit einem Ventilator aus dem Gehäuse 12 in dessen Umgebung abgeführt. Diese Abluft 34 stellt also Fortluft dar.

Das Gut 14 gelangt dann von der ersten Sektion 20 in die zweite Sektion 22. In der zweiten Sektion 22 wird unten Abluft 34 abgeführt. Diese Abluft 34 wird mittels einer Abluftrückführeinrichtung 38, die insbesondere einen Ventilator umfasst, zu einer Rückführleitung 40 geleitet. Durch die Rückführleitung 40 wird diese Abluft 34 wieder zum Großteil in die Sektion 22 als Zuluft 42 zurückgeführt.

An der Rückführleitung 40 kann eine Klappe 46 angeschlossen sein, durch die hindurch ein Teil der Abluft 34 direkt in die Umgebung des Durchlauftrockners 10 abgeführt werden kann.

Am Ausgang der Rückführleitung 40 ist ein Heizer 44 angeordnet, mittels dessen die rückgeführte Abluft 34 vor ihrem Wiedereintritt als Zuluft 42 in die Sektion 22 aufgewärmt werden kann. Der Heizer 44 kann, muss aber nicht zwingend vorgesehen sein. Alternativ kann der Heizer 44 auch eine vergleichsweise kleine Heizkapazität aufweisen. Die Abluft 34 aus der Sektion 22 wird also mittels der Abluftrückführeinrichtung 38 zum größten Teil direkt als Zuluft 42 in die Sektion 22 zurückgeführt.

Die Rückführleitung 40 weist ferner eine Abzweigung 48 auf, an der eine Leitung 50 angeschlossen ist. An der Abzweigung 48 wird ein Teil der Abluft 34 aus der Rückführleitung 40 abgezweigt und mittels der Leitung 50 abgeleitet. Dazu kann in der Leitung 50 ein getrennt zu regelnder, saugender Ventilator 52 angeordnet sein. Die Leitung 50 führt die abgezweigte Abluft zu einem Wärmeübertrager 54, durch diesen hindurch.

Der Wärmeübertrager 54 weist eine Trennfläche 56 auf, an der an einer Seite als wärmezuführende Luft die abgezweigte Abluft 34 aus der zweiten Sektion 22 und an der anderen Seite als wärmeabführende Luft die Frischluft 26 entlanggeführt wird. An der Trennfläche 56 geht so Wärme von der Abluft 34 als Abwärme 58 auf die Frischluft 26 über. Zugleich kondensiert mit dem Abkühlen der Abluft 34 an der Trennfläche 56 Wasser 60 aus der Abluft 34 aus.

Eine Rückführleitung 62 leitet die derart abgekühlte und auskondensierte Luft als Zuluft 42 zurück in die zweite Sektion 22. Dazu kann in der Rückführleitung 62 ein getrennt zu regelnder, saugender Ventilator 64 angeordnet sein. Die Rückführleitung 62 mündet an einer Einmündung 66 in Strömungsrichtung hinter der Abzweigung 48 in die Rückführleitung 40.

In Strömungsrichtung kurz hinter dem Ventilator 64 zweigt von der Rückführleitung 62 eine nach außen in die Umgebung des Durchlauftrockners 10 führende Leitung 68 mit einer darin angeordneten Klappe 70 ab. Diese Leitung 68 dient mit der zugeordneten Klappe 70 dazu, aus der Rückführleitung 62 abgekühlte Abluft 34 in die Umgebung abzuführen.

Mit dem derartigen Abführen eines Teils der Abluft 34 in die Umgebung des Durchlauftrockners 10 entsteht in der Sektion 22 ein leichter Unterdruck. Zum Ausgleich dieses Unterdrucks wird aus der Umgebung des Durchlauftrockners 10 von außen Luft in die Sektion 22 hineingedrückt. Zugleich kann aus der Sektion 22 keine Luft und damit auch kein Staub nach außen austreten. Dabei ist in der Sektion 22 das zu trocknende Gut 14 bereits vergleichsweise trocken und neigt damit besonders zur Staubbildung. Das Zuführen von Luft von außen in die Sektion 22 hinein verhindert also ein Verstauben der Umgebung des Durchlauftrockners 10.

Die Frischluft 26 wird mittels einer Zuleitung 72 durch den Wärmeübertrager 54 hindurch und, wie oben erläutert, durch den Heizer 30 hindurch in die erste Sektion 20 geleitet. Dabei wird die Menge an derart zugeführter Zuluft 32 mittels einer Klappe 74 gesteuert, die in der Zuleitung 72 vor dem Wärmeübertrager 54 angeordnet ist.

Die genannten Klappen und Ventilatoren werden insgesamt mittels einer Steuerung 76 gesteuert und insbesondere geregelt, wobei diverse, mit der Steuerung 76 gekoppelte (nicht dargestellte) Messeinrichtungen und Sensoren vorgesehen sein können.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Durchlauftrockner
- 12: Gehäuse
- 14: Gut
- 16: Band
- 18: Transportrichtung
- 20: erste Sektion
- 22: zweite Sektion
- 24: Warmluft
- 26: Frischluft
- 28: Frischluftzuführeinrichtung
- 30: Heizer
- 32: Zuluft
- 34: Abluft
- 36: Abluftabführung
- 38: Abluftrückführeinrichtung
- 40: Rückführleitung
- 42: Zuluft
- 44: Heizer
- 46: Klappe
- 48: Abzweigung
- 50: Leitung
- 52: Ventilator
- 54: Wärmeübertrager
- 56: Trennfläche
- 58: Abwärme
- 60: Wasser
- 62: Rückführleitung
- 64: Ventilator
- 66: Einmündung
- 68: Leitung
- 70: Klappe
- 72: Zuleitung
- 74: Klappe
- 76: Steuerung

## Patentansprüche

1. Durchlauftrockner (10) zum Trocknen eines Gutes (14) in zwei Sektionen (20, 22) mittels Warmluft (24) mit einer Frischluftzuführeinrichtung (28) zum Zuführen von Frischluft (26) als Zuluft (32) in eine Sektion (20), einer Abluftrückführeinrichtung (38) zum Abführen von Abluft (34) aus der anderen Sektion (22) und Rückführen der Abluft (34) durch eine Rückführleitung (40) als Zuluft (42) in die andere Sektion (22), und einem Wärmeübertrager (54), durch den hindurch zum einen Frischluft (26) und zum anderen Abluft (34) geführt sind, zum Übertragen von Abwärme der Abluft (34) in die Frischluft (26), wobei die zwei Sektionen (20, 22) vom Gut (14) in einer Transportrichtung (18) nacheinander durchlaufen werden, wobei von der Rückführleitung (40) eine Leitung (50) abzweigt, mittels der abgezweigte Abluft (34) zu dem Wärmeübertrager (54) und durch diesen hindurch geführt ist, **dadurch gekennzeichnet, dass** eine Abführvorrichtung (68, 70) zum Abführen eines Teils dieser abgezweigten Abluft (34) aus dem Durchlauftrockner (10) heraus vorgesehen ist.

2. Durchlauftrockner nach Anspruch 1,
**dadurch gekennzeichnet, dass** die Abführvorrichtung (68, 70) in Strömungsrichtung der Abluft (34) hinter dem Wärmeübertrager (54) angeordnet ist.

3. Durchlauftrockner nach Anspruch 1 oder 2,
**dadurch gekennzeichnet, dass** eine Vorrichtung (38, 46, 52, 64, 70) zum Steuern der Menge an abgeführter Abluft (34) im Verhältnis zur Menge an rückgeführter Abluft (34) vorgesehen ist.

4. Durchlauftrockner nach einem der Ansprüche 1 bis 3,
**dadurch gekennzeichnet, dass** eine erste und eine zweite Sektion vorgesehen sind, die vom Gut (14) in einer Transportrichtung (18) nacheinander durchlaufen werden, wobei die Frischluftzuführeinrichtung (28) zum Zuführen von Frischluft (26) als Zuluft (32) in die erste Sektion (20), und die Abluftrückführeinrichtung (38) zum Abführen von Abluft (34) aus der zweiten Sektion (22) und Rückführen als Zuluft (42) zurück in die zweite Sektion (22) gestaltet sind.

5. Durchlauftrockner nach einem der Ansprüche 1 bis 3,
**dadurch gekennzeichnet, dass** eine erste und eine zweite Sektion (20, 22) vorgesehen sind, die vom Gut (14) in einer Transportrichtung (18) nacheinander durchlaufen werden, wobei die Frischluftzuführeinrichtung (28) zum Zuführen von Frischluft (26) als Zuluft in die zweite Sektion, und die Abluftrückführeinrichtung (38) zum Abführen von Abluft (34) aus der ersten Sektion und Rückführen als Zuluft zurück in die erste Sektion gestaltet sind.

6. Durchlauftrockner nach einem der Ansprüche 1 bis 5,
**dadurch gekennzeichnet, dass** ein Heizer (30) vorgesehen ist, mittels dessen die Frischluft (26) vor deren Zuführen als Zuluft (32) aufzuheizen ist.

7. Durchlauftrockner nach einem der Ansprüche 1 bis 6,
**dadurch gekennzeichnet, dass** ein Heizer (44) vorgesehen ist, mittels dessen die durch den Wärmeübertrager (54) geführte Abluft (34) vor deren Zuführen als Zuluft (42) aufzuheizen ist.

8. Durchlauftrockner nach einem der Ansprüche 1 bis 7,
**dadurch gekennzeichnet, dass** der Wärmeübertrager (54) derart dimensioniert ist, dass an ihm Wasser aus der Abluft (34) auskondensiert.

9. Durchlauftrockner nach einem der Ansprüche 1 bis 8,
**dadurch gekennzeichnet, dass** die Abluftrückführeinrichtung (38) mit einer Saugvorrichtung zum Absaugen von Abluft (34) versehen ist.

10. Verfahren zum Betreiben eines Durchlauftrockners (10) zum Trocknen eines Gutes (14) in zwei Sektionen (20, 22) mittels Warmluft (24), bei dem Frischluft (26) als Zuluft (32) in eine Sektion (20) zugeführt wird, Abluft (34) aus der anderen Sektion (22) abgeführt und die Abluft (34) durch eine Rückführleitung (40) als Zuluft (42) in die andere Sektion (22) rückgeführt wird und mittels eines Wärmeübertragers (54) Abwärme (58) der Abluft (34) in die Frischluft (26) übertragen wird, wobei die zwei Sektionen (20, 22) vom Gut (14) in einer Transportrichtung (18) nacheinander durchlaufen werden, wobei von der Rückführleitung (40) eine Leitung (50) abzweigt, mittels der abgezweigte Abluft (34) zu dem Wärmeübertrager (54) und durch diesen hindurch geführt wird,
**dadurch gekennzeichnet, dass** ein Teil dieser abgezweigten Abluft (34) aus dem Durchlauftrockner (10) heraus abgeführt wird.

## Claims

1. Continuous flow drier (10) for drying a material (14) in two sections (20, 22) by means of hot air (24), having a fresh air supply device (28) for supplying fresh air (26) as supply air (32) into one section (20), an exhaust air recirculation device (38) for removing exhaust air (34) from the other section (22) and recirculating the exhaust air (34) through a recirculation line (40) into the other section (22) as supply air (42), and a heat exchanger (54), through which on the one hand fresh air (26) and on the other hand exhaust air (34) are guided, for transferring waste heat of the exhaust air (34) into the fresh air (26), wherein the material (14) passes through the two sections (20, 22) in succession in a transport direction (18), wherein there branches from the recirculation line (40) a line (50) by means of which branched waste air (34) is guided to and through the heat exchanger (54),
**characterised in that** a removal device (68, 70) for removing a portion of the branched exhaust air (34) from the continuous flow drier (10) is provided.

2. Continuous flow drier according to claim 1,
**characterised in that** the removal device (68, 70) is arranged after the heat exchanger (54) in the direction of flow of the exhaust air (34).

3. Continuous flow drier according to claim 1 or 2,
**characterised in that** a device (38, 46, 52, 64, 70) for controlling the amount of exhaust air (34) removed in relation to the amount of recirculated exhaust air (34) is provided.

4. Continuous flow drier according to any one of claims 1 to 3,
**characterised in that** there are provided a first and a second section through which the material (14) flows in succession in a transport direction (18), wherein the fresh air supply device (28) is configured to supply fresh air (26) as supply air (32) into the first section (20), and the exhaust air recirculation device (38) is configured to remove exhaust air (34) from the second section (22) and to recirculate it as supply air (42) back into the second section (22).

5. Continuous flow drier according to any one of claims 1 to 3,
**characterised in that** there are provided a first and a second section (20, 22) through which the material (14) passes in succession in a transport direction (18), wherein the fresh air supply device (28) is configured to supply fresh air (26) as supply air into the second section, and the exhaust air recirculation device (38) is configured to remove exhaust air (34) from the first section and to recirculate it as supply air back into the first section.

6. Continuous flow drier according to any one of claims 1 to 5,
**characterised in that** a heater (50) is provided, by means of which the fresh air (26) is to be heated before it is supplied as supply air (32).

7. Continuous flow drier according to any one of claims 1 to 6,
**characterised in that** a heater (44) is provided, by means of which the exhaust air (34) guided through the heat exchanger (54) is to be heated before it is supplied as supply air (42).

8. Continuous flow drier according to any one of claims 1 to 7,
**characterised in that** the heat exchanger (54) is so dimensioned that water from the exhaust air (34) condenses out thereon.

9. Continuous flow drier according to any one of claims 1 to 8,
**characterised in that** the exhaust air recirculation device (38) is provided with a suction device for extracting exhaust air (34) by suction.

10. Method of operating a continuous flow drier (10) for drying a material (14) in two sections (20, 22) by means of hot air (24), in which fresh air (26) is supplied into one section (20) as supply air (32), exhaust air (34) is removed from the other section (22) and the exhaust air (34) is recirculated through a recirculation line (40) into the other section (22) as supply air (42), and waste heat (58) of the exhaust air (34) is transferred into the fresh air (26) by means of a heat exchanger (54), wherein the material (14) passes through the two sections (20, 22) in succession in a transport direction (18), wherein there branches from the recirculation line (40) a line (50) by means of which branched exhaust air (34) is guided to and through the heat exchanger (54),
**characterised in that** a portion of the branched exhaust air (34) is removed from the continuous flow drier (10).

## Revendications

1. Séchoir continu (10) utilisé pour le séchage d'une marchandise (14) dans deux sections (20, 22) à l'aide d'air chaud (24), avec un dispositif d'amenée d'air frais (28) permettant d'amener de l'air frais (26) sous la forme d'air entrant (32) dans une section (20), avec un dispositif de recyclage d'air sortant (38) permettant d'évacuer l'air sortant (34) hors de l'autre section (22) et de réintroduire l'air sortant (34) à travers une conduite de retour (40) sous la forme d'air entrant (42) dans l'autre section (22) et avec un échangeur thermique (54) à travers lequel d'une part l'air frais (26) et d'autre part l'air sortant (34) sont guidés, de façon à transmettre la chaleur dissipée de l'air sortant (34) à l'air frais (26), les deux sections (20, 22) étant traversées l'une après l'autre par la marchandise (14) dans une direction de transport (18), une conduite (50) étant dérivée de la conduite de retour (40), l'air sortant (34) dérivé étant guidé à travers elle et amené à un échangeur thermique (54) grâce à elle, **caractérisé en ce qu'**un dispositif d'évacuation (68, 70) est prévu pour l'évacuation d'une partie de cet air sortant (34) dérivé sortant du séchoir continu (10).

2. Séchoir continu selon la revendication 1, **caractérisé en ce que** le dispositif d'évacuation (68, 70) est disposé derrière l'échangeur thermique (54) dans la direction d'écoulement de l'air sortant (34).

3. Séchoir continu selon la revendication 1 ou 2, **caractérisé en ce qu'**un dispositif (38, 46, 52, 64, 70) est prévu pour commander la quantité d'air sortant (34) évacué par rapport à la quantité d'air sortant (34) réintroduit.

4. Séchoir continu selon l'une quelconque des revendications 1 à 3, **caractérisé en ce qu'**une première et une deuxième section sont prévues, ces sections étant traversées l'une après l'autre par la marchandise (14) dans une direction de transport (18), le dispositif d'amenée d'air frais (28) étant agencé pour amener de l'air frais (26) sous la forme d'air entrant (32) dans la première section (20) et le dispositif de recyclage d'air sortant (38) étant conçu pour évacuer l'air sortant (34) hors de la deuxième section (22) et pour le réintroduire sous la forme d'air entrant (42) dans la deuxième section (22).

5. Séchoir continu selon l'une quelconque des revendications 1 à 3, **caractérisé en ce qu'**une première et une deuxième section (20, 22) sont prévues, ces sections étant traversées l'une après l'autre par la marchandise (14) dans une direction de transport (18), le dispositif d'amenée d'air frais (28) étant agencé pour amener l'air frais (26) sous la forme d'air entrant dans la deuxième section et le dispositif de recyclage d'air sortant (38) étant conçu pour évacuer l'air sortant (34) hors de la première section et pour le réintroduire sous la forme d'air entrant dans la première section.

6. Séchoir continu selon l'une quelconque des revendications 1 à 5, **caractérisé en ce qu'**un chauffage (30) est prévu à l'aide duquel l'air frais (26) est chauffé avant d'être amené sous la forme d'air entrant (32).

7. Séchoir continu selon l'une quelconque des revendications 1 à 6, **caractérisé en ce qu'**un chauffage (44) est prévu à l'aide duquel l'air sortant (34) guidé à travers l'échangeur thermique (54) est chauffé avant d'être amené sous la forme d'air entrant (42).

8. Séchoir continu selon l'une quelconque des revendications 1 à 7, **caractérisé en ce que** l'échangeur thermique (54) est dimensionné de façon à condenser l'eau provenant de l'air sortant (34) à son contact.

9. Séchoir continu selon l'une quelconque des revendications 1 à 8, **caractérisé en ce que** le dispositif de recyclage d'air sortant (38) est pourvu d'un dispositif d'aspiration permettant d'aspirer l'air sortant (34).

10. Procédé d'exploitation de séchoir continu (10) permettant de sécher une marchandise (14) dans deux sections (20, 22) à l'aide d'air chaud (24), dans lequel l'air frais (26) est amené sous la forme d'air entrant (32) dans une section (20), l'air sortant (34) étant évacué de l'autre section (22) et l'air sortant (34) étant réintroduit à travers une conduite de retour (40) sous la forme d'air entrant (42) dans l'autre section (22) et la chaleur dissipée (58) de l'air sortant (34) étant transmise à l'air frais (26) à l'aide d'un échangeur thermique (54), les deux sections (20, 22) étant traversées l'une après l'autre par la marchandise (14) dans une direction de transport (18), une conduite (50) étant dérivée de la conduite de retour (40), l'air sortant (34) dérivé étant guidé à travers elle et amené à un échangeur thermique (54) grâce à elle, **caractérisé en ce qu'**une partie de cet air sortant (34) dérivé du séchoir continu (10) est évacuée.
